# EUROPEAN PATENT SPECIFICATION

(11) **EP 0 480 768 B1**
(45) Date of publication and mention of the grant of the patent: **24.05.1995**
(21) Application number: 91309412.4
(22) Date of filing: 14.10.1991
(51) Int. Cl.: C04B 35/58, H01T 13/38

(54) **A sintered ceramic body, a method of making the same and spark plug insulator made therefrom**
Gesinterter Keramikkörper, Verfahren zu seiner Herstellung und daraus hergestellter Zündkerzenisolator
Corps fritté en céramique, procédé de fabrication et isolateur des bougies en cette matière

(30) Priority: 12.10.1990 JP 274896/90
(43) Date of publication of application: 15.04.1992
(73) Proprietor: NGK SPARK PLUG CO., LTD, Nagoya-shi (JP)
(72) Inventor: Sugimoto, Makoto, c/o NGK Spark Plug Co., Ltd., Mizuho-ku, Nagoya-shi (JP); Musasa, Mamoru, c/o NGK Spark Plug Co., Ltd., Mizuho-ku, Nagoya-shi (JP); Tanabe, Hiroyuki, c/o NGK Spark Plug Co., Ltd., Mizuho-ku, Nagoya-shi (JP); Konishi, Masahiro, c/o NGK Spark Plug Co., Ltd., Mizuho-ku, Nagoya-shi (JP)
(74) Representative: Senior, Alan Murray

(56) References cited:
- CHEMICAL ABSTRACTS, vol. 82, no. 22, 1974, Columbus, Ohio, US; abstract no. 144186F, A. EBISAWA ET AL.: 'Nonporous silicon nitride porcelain'
- JOURNAL OF MATERIALS SCIENCE vol. 22, no. 11, November 1987, LONDON,GB pages 4056 - 4060; M. ZULFEQUAR ET AL.: 'Electrical conductivity of hot-pressed AlN ceramic'

## Description

This invention relates to a sintered ceramic body for a spark plug insulator which needs good electrical insulation properties at high ambient temperature and good thermal conductivity.

In a spark plug insulator for an internal combustion engine, a nitride-based sintered ceramic body has been employed since the sintered ceramic body has good thermal conductivity (see e.g. patent application JP-A-49040123).

The nitride-based sintered ceramic body, however, tends to lose its electrical insulation when exposed to high temperatures and grows crystals treeing over the surface of the sintered ceramic body when high voltages are applied.

Since a nitride-based sintered ceramics chemical structure has strong covalent bonds, free electrons give rise to electrical conductivity. An increase in temperature facilitates the movement of the free electrons thus decreasing the electrical resistance and thus the insulation property of the sintered body.

Therefore, it is an object of the invention to provide a sintered ceramic body and spark plug insulator which is capable of maintaining good insulation at high temperatures with good thermal conductivity.

According to the present invention, there is provided a sintered ceramic body comprising magnesium uniformly diffused into grains of a nitride-based ceramic, the amount of diffused magnesium being between 20 ppm and 100 ppm inclusive, calculated by reducing the magnesia to elemental magnesium.

Preferably, diffusion of magnesium is measured by the EPMA (Electron Probe Micro-Analysis) method. The quantity, or concentration of magnesium may be measured by fluorescent analysis.

Further, the nitride-based ceramic body may include auxiliary agents up to 10% by weight selected from the group consisting of alkaline earth metal compounds, rare-earth element compounds and mixtures of the alkaline earth metal compounds and the rare-earth element compounds, the weight percentage of the auxiliary agents being calculated by reducing the agents to their elemental forms.

The nitride-based ceramic body is suitable for use in the insulator of a spark plug.

By adding magnesium (Mg) ranging from 20 ppm to 100 ppm, the amount being calculated from reduced magnesia (Mgo), and uniformly diffusing the magnesium into grains of the nitride-based ceramic body, the free electrons are caught by magnesium ions (Mg++) thus protecting the ceramic body against loss of electrical resistance. Prevention against the loss of electrical resistance prevents crystal growth or treeing.

A magnesium (Mg) concentration of less than 20 ppm has significantly no affect on the elevated insulation property. A concentration exceeding 100 ppm deteriorates the thermal conductivity.

Further, adding auxiliary agents up to 10% by weight can lead to improved properties in the sintered ceramic body. Addition of the auxiliary agents exceeding 10% by weight reduces the thermal conductivity intrinsically provided with the nitride-based ceramic body.

When the nitride-based ceramic body is employed as a spark plug insulator, the resulting spark plug is capable of maintaining good insulation properties and good thermal conductivity at a wide range of operating temperatures.

The invention will be further understood from the following description, when taken together with the attached Figure, which is given by way of example only, and which is a schematic plan view showing a device for measuring the insulation resistance of test pieces at high temperatures.

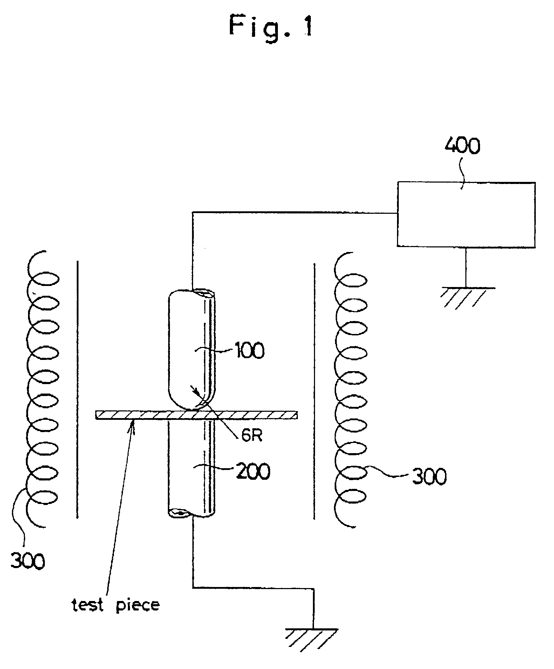

Referring to Fig. 1 and Table 1, an embodiment of the invention is described herein. Aluminum nitride (AlN) powder is prepared whose granular size measures 1.5 »m in average diameter (sedimentation analysis) with an oxygen-content of 0.8% by weight.

Auxiliary agents employed herein are all 99.9% purity selected alone or combination from the group consisting of yttrium oxide (Y₂0₃), calcium oxide (CaO), strontium oxide (SrO), scandium oxide (SC₂O₃), neodymium oxide (Nd₂O₃) and europium oxide (Eu₂O₃).

The device shown in Fig. 1 is used to measure insulation resistance of counterpart test pieces and test pieces according to the invention at a temperature of 700°C. The device has brass-made electrodes 100, 200, a heater 300 and a 500-volt digital resistance meter 400. Regarding to measurement of thermal conductivity, laser flash method is used. An amount of magnesium (Mg) produced by reducing its oxide (MgO) is measured by means of I.C.P. (Inductively Coupled Plasma Emission Spectro-Photometer). Amounts of the auxiliary agents and aluminum are each measured on the basis of fluorescent-sensitive X-ray detection.

The test pieces (Nos. 1 ∼ 11) according to the invention are manufactured as follows:
(1) The mixture of the auxiliary agents (in case of Nos. 1 ∼ 9), aluminum nitride (AlN) powder and ethanol, wax-related binder are kneaded overnight within a nylon pot by means of a ball. The quantity of auxiliary agents added is determined by taking the fact into consideration that the auxiliary agents disappear during a sintering process described hereinafter.
(2) After spray drying from the mixture thus slurried, the mixture is pressed by a metallic die at 1 ton/cm² pressure, end is formed into a compact plate which measures 50 mm in diameter and 3 mm in thickness when the compact plate is employed to measurement of its electrical resistance.
(3) The compact plate is degreased by primarily heating it in an atmospheric environment at the temperature of 500 °C for two hours.
(4) Then the compact plate is sintered in accordance with the following magnesium diffusion process under the conditions indicated by Table 1. The magnesium diffusion processes and the conditions are such that the magnesium (Mg) is uniformly diffused into grains of the nitride-based sintered plate with an amount of the diffused magnesium (Mg) within a range from 20 ppm to 100 ppm (part per million) inclusive which is calculated by reducing the magnesium oxide (MgO) to elemental magnesium (Mg).

In this instance, the compact plate is milled to be 50 mm in diameter and 1.0 mm in thickness when it is employed in the measurement of its electrical resistance, while being milled to be 10 mm in diameter and 2.0 mm in thickness when it is employed in the measurement of its thermal conductivity.

The magnesium diffusion processes are as follows:
(a) After coating an admixture suspension of 90 wt % BN, 10 wt % MgO and ethanol on the surface of the primarily sintered compact plate, the plate is secondarily sintered in nitrogen atmosphere for the case of test piece Nos. 1, 2, 4, 6, 10 and 11.
(b) The primarily sintered compact plate is secondarily sintered within a magnesia shell (MgO shell) in nitrogen atmosphere for the case of test piece Nos. 3, 5, 7, 8 and 9. In these instances, the secondary sintering temperature preferably ranges from 1600°C to 1900°C.

According to the test pieces Nos. 1 - 11 of the invention, it is found that all of them have good insulation resistance and favourable thermal conductivity at the temperature of 700°C, thus making the sintered body wellsuited for a spark plug insulator.

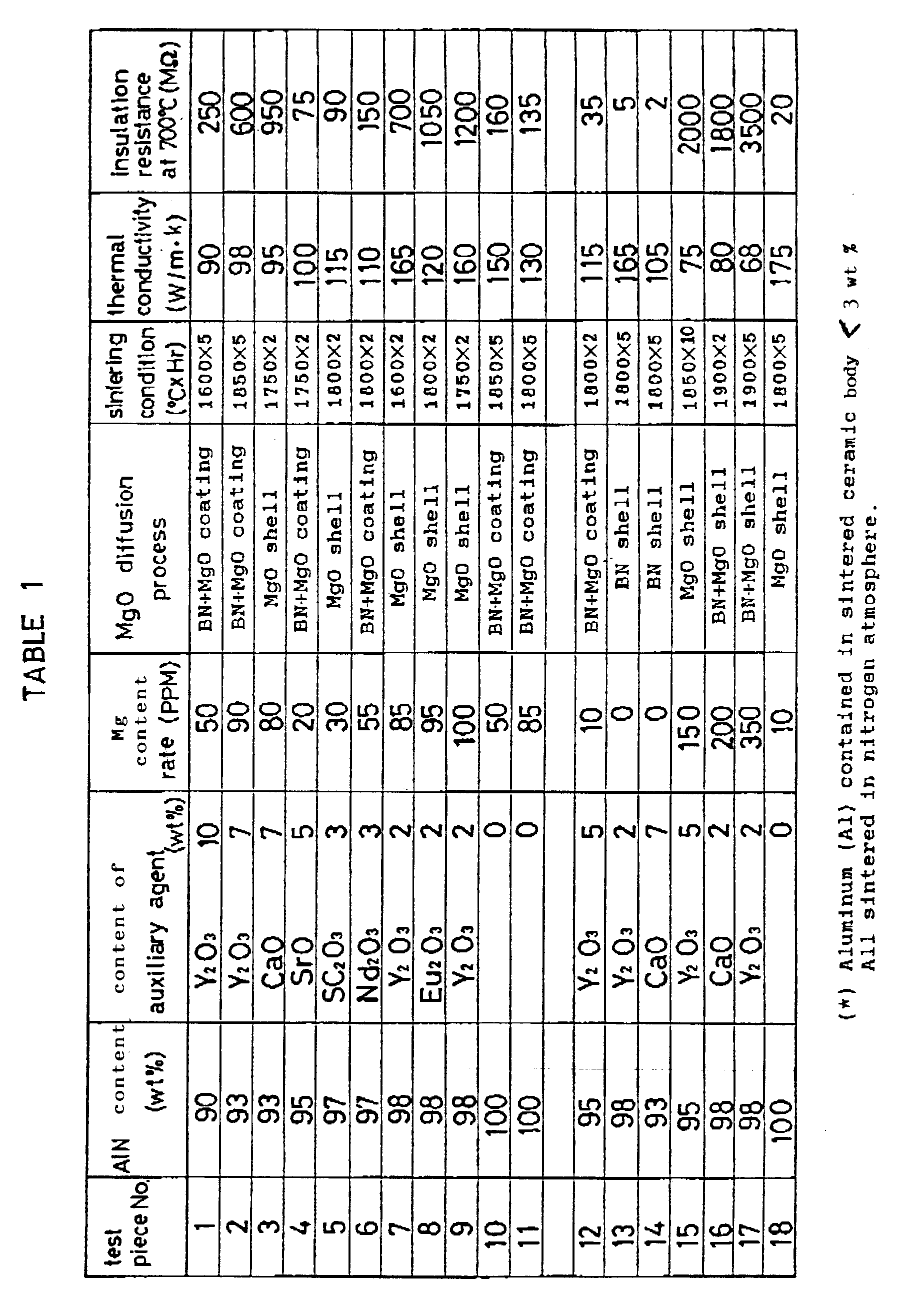

Comparing the test piece Nos. 1 ∼ 11 to the counterpart test piece Nos. 12 ∼ 18 which are manufactured substantially in the same manner as the test piece Nos. 1 ∼ 11, it is found that no diffusion content of Mg (Nos. 13 and 14) and Mg of less than 20 ppm (Nos. 12 and 18) significantly decreases the insulation resistance, while Mg exceeding 100 ppm (Nos. 15, 16 and 17) greatly decreases the thermal conductivity.

It is noted that a spark plug insulator needs the thermal conductivity of more than 90 W/m and the insulation resistance of more than 50 MΩ at 700 °C from treeing-preventing viewpoint.

Aluminum of less than 3 wt % increases the thermal conductivity within the sintered ceramic body structurally fine-grained. Aluminum nitride (AlN) of less than 2.0 wt % oxygen content positively results in aluminum of less than 3 wt %.

A spark plug insulator was made in accordance with the test piece Nos. 1 ∼ 11. After a center electrode, a resistor and a terminal electrode were placed within an axial bore of the insulator through a conductive glass sealant, and the insulator placed within a metallic shell to form a spark plug capable of preventing misignition at a wide range of operation temperatures.

It is noted that the nitride-based ceramic categorically includes sialon (Trademark) and aluminum nitride oxide (AlON) as nitride oxide-based ceramic.

It is further noted that barium (Ba) is an appropriate selection as alkali-based earth metal, while lanthanum (La), cerium (Ce) and dysprosium (Dy) are appropriate selections as rare-earth elements.

It is appreciated that the primarily sintered compact plate is secondarily sintered within a boron nitride shell (BN shell) whose inner wall is coated with magnesia (MgO) as indicated by BN + MgO shell. In this instance, the secondary sintering temperature preferably ranges from 1600 °C to 1900 °C.

## Claims

1. A sintered ceramic body comprising magnesium (Mg) uniformly diffused into grains of a nitride-based ceramic, the amount of diffused magnesium (Mg) being between 20 ppm and 100 ppm inclusive, calculated by reducing the magnesia (MgO) to elemental magnesium (Mg).

2. A sintered ceramic body according to claim 1, wherein the nitride-based ceramic includes an auxiliary agent up to 10% by weight, the auxiliary agent being one or both of: an alkaline earth metal compound and a rare-earth element compound, the weight percentage of the auxiliary agent being calculated by reducing the compound or compounds to their elemental forms.

3. An insulator for a spark plug comprising a sintered ceramic body according to claim 1 or 2.

4. A method of making a sintered ceramic body comprising the steps of:
preparing a mixture of a nitride-based ceramic including auxiliary agents selected from the group consisting of alkaline earth metal compounds, rare-earth element compounds and mixtures of the alkaline earth metal compounds and the rare-earth element compounds;
pressing the mixture to form a compact body;
either placing the compact body within a magnesia shell or within a boron nitride (BN) shell, an inner surface of which is coated with magnesia (MgO), or applying a magnesia (MgO)-laden suspension to a surface of the compact body; and
sintering the compact body at a temperature of between 1600°C and 1900°C in order to uniformly diffuse magnesia (Mg0) into grains of the nitride-based ceramic body, the amount of diffused magnesium (Mg) being from 20 ppm to 100 ppm inclusive, calculated by reducing the magnesia (Mg0) to elemental magnesium (Mg).

5. A method of making an insulator for a spark plug comprising: making a sintered compact body according to one method of claim 4 and making an insulator for a spark plug from said body.

## Patentansprüche

1. Gesinterter keramischer Kõrper, welcher Magnesium (Mg) umfaßt, das gleichmäßig zu Kõrnchen eines keramischen Stoffes auf Nitridbasis diffundiert ist, wobei die Menge des diffundierten Magnesiums (Mg) zwischen 20 ppm und 100 ppm einschließlich liegt, wie durch Reduktion der Magnesia (MgO) zu elementarem Magnesium (Mg) errechnet.

2. Gesinterter keramischer Kõrper gemãß Anspruch 1, worin der keramische Stoff auf Nitridbasis ein Hilfsstoff in einer Menge von bis zu 10 Gew.-% enthãlt, wobei der Hilfsstoff entweder eine Erdalkalimetallverbindung oder eine Seltenerdmetallverbindung oder beides ist und der prozentuale Gewichtsanteil des Hilfsstoffs durch Reduktion der Verbindung oder Verbindungen zu ihren elementaren Formen errechnet wird.

3. Isolator für eine Zündkerze, welcher einen gesinterten keramischen Kõrper gemãß Anspruch 1 oder 2 umfaßt.

4. Verfahren zur Herstellung eines gesinterten keramischen Kõrpers, welches die folgenden Schritte umfaßt:
Herstellen eines Gemischs eines keramischen Stoffes auf Nitridbasis, welches Hilfsstoffe enthãlt, ausgewãhlt aus der Gruppe bestehend aus Erdalkalimetallverbindungen, Seltenerdmetallverbindungen und Gemischen aus Erdalkalimetallverbindungen und Seltenerdmetallverbindungen;
Pressen des Gemischs zur Bildung eines Kompaktkõrpers;
entweder Einbringen des Kompaktkõrpers in eine Magnesiahülle oder in eine Bornitrid-(Bn)-Hülle, deren innere Oberflãche mit Magnesia (MgO) beschichtet ist, oder Auftragen einer Magnesia-(MgO)-geladenen Suspension auf eine Oberflãche des Kompaktkõrpers; und
Sintern des Kompaktkõrpers bei einer Temperatur von zwischen 1600°C und 1900°C, um die Magnesia (MgO) gleichmãßig zu Kõrnchen des keramischen Kõrpers auf Nitridbasis zu diffundieren, wobei die Menge des diffundierten Magnesiums (Mg) zwischen 20 ppm und 100 ppm einschließlich liegt, wie durch Reduktion der Magnesia (MgO) zu elementarem Magnesium (Mg) errechnet.

5. Verfahren zur Herstellung eines Isolators für eine Zündkerze, welches umfaßt:
Herstellen eines gesinterten Kompaktkõrpers gemãß einem Verfahren aus Anspruch 4 und Herstellen eines Isolators für eine Zündkerze aus diesem Kõrper.

## Revendications

1. Corps en céramique fritté comprenant du magnésium (Mg) ayant uniformément diffusé dans les grains d'une céramique à base de nitrure, la quantité de magnésium (Mg) ayant diffusé étant comprise entre 20 ppm et 100 ppm inclus, celle-ci étant calculée en réduisant la magnésie (MgO) en magnésium élémentaire (Mg).

2. Corps en céramique fritté selon la revendication 1, dans lequel la céramique à base de nitrure contient un agent auxiliaire en une quantité pouvant aller jusqu'à 10% en poids, l'agent auxiliaire étant un composé de métal alcalino-terreux ou un composé d'élément des terres rares ou les deux, le pourcentage pondéral de l'agent auxiliaire étant calculé en réduisant le composé ou les composés en leurs formes élémentaires.

3. Isolant pour une bougie d'allumage comprenant un corps en céramique fritté selon la revendication 1 ou 2.

4. Procédé de fabrication d'un corps en céramique fritté comprenant les étapes consistant à :
préparer un mélange d'une céramique à base de nitrure contenant des agents auxiliaires choisis parmi des composés de métaux alcalino-terreux, des composés d'éléments des terres rares et des mélanges de composés de métaux alcalino-terreux et de composés d'éléments des terres rares ;
comprimer le mélange pour former un corps compact ;
soit placer le corps compact à l'intérieur d'une enveloppe de magnésie ou à l'intérieur d'une enveloppe de nitrure de bore (BN), dont une surface interne est revêtue de magnésie (MgO), soit appliquer une suspension chargée de magnésie (MgO) sur une surface du corps compact ; et
fritter le corps compact à une température comprise entre 1600°C et 1900°C pour faire diffuser uniformément la magnésie (MgO) dans les grains du corps en céramique à base de nitrure de bore, la quantité de magnésium (Mg) ayant diffusé étant comprise entre 20 ppm et 100 ppm inclus, celle-ci étant calculée en réduisant la magnésie (MgO) en magnésium élémentaire (Mg).

5. Procédé de fabrication d'un isolant pour bougie d'allumage comprenant les étapes consistant à : fabriquer un corps compact fritté selon le procédé de la revendi-cation 4 et fabriquer un isolant pour une bougie d'allumage à partir dudit corps.
